# EUROPÄISCHE PATENTSCHRIFT

(11) **EP 0 618 032 B1**
(45) Veröffentlichungstag und Bekanntmachung des Hinweises auf die Patenterteilung: **24.09.1997**
(21) Anmeldenummer: 94105158.3
(22) Anmeldetag: 31.03.1994
(51) Int. Cl.: B23C 3/12, B23Q 5/58

(54) **Vorrichtung zur Bearbeitung der Eckverbindungen von aus Kunststoffprofilen geschweissten Fenster- oder Türrahmen**
Device for the treatment of cornerjoints of window or door frames made of welded plastic profiles
Dispositif pour le traitement des joints d'angle de châssis fenêtre ou de porte en matière plastique soudés

(30) Priorität: 31.03.1993 DE 4310629
(43) Veröffentlichungstag der Anmeldung: 05.10.1994
(73) Patentinhaber: Eisenbach, Bernhard, D-65611 Brechen (DE)
(72) Erfinder: Eisenbach, Bernhard, D-65611 Brechen (DE)
(74) Vertreter: Müller, Eckhard, Dr.

(56) Entgegenhaltungen:
- EP-A- 0 325 264
- EP-A- 0 443 398
- EP-A- 0 460 654

## Beschreibung

Die Erfindung bezieht sich auf eine Vorrichtung zur Bearbeitung der Eckverbindungen von aus Profilstücken geschweißten Rahmen, insbesondere Fenster- oder Türrahmen, mit wenigstens einer um eine Achse senkrecht zur Aufnahmeebene des zu bearbeitenden Rahmens schwenkbaren Bearbeitungseinheit, welche an einem wenigstens in Richtung senkrecht zur Schwenkachse von einer zurückgezogenen Ausgangsstellung in eine Bearbeitungsstellung an dem Rahmen verfahrbaren Schlitten angeordnet ist, der zwei im Abstand voneinander angeordnete, in Bearbeitungsstellung das zu bearbeitende Rahmeneck zumindest teilweise seitlich übergreifende Werkzeugträger für die Bearbeitungswerkzeuge aufweist.

Ein Vorrichtung der eingangs genannten Art ist bereits aus der EP 0 325 264 A2 bekannt mit wenigstens zwei seitlich einer Förderbahn für die zu bearbeitenden Rahmen angeordneten Bearbeitungseinheiten, welche quer zur Förderbahn verfahrbar sind, um Rahmen mit unterschiedlichen Breiten bearbeiten zu können. Die Bearbeitungseinheiten sind jeweils um eine senkrechte Achse zwischen einer Stellung für die Bearbeitung der in Förderrichtung vorauslaufenden Rahmenecken und einer Stellung für die Bearbeitung der in Förderrichtung nachlaufenden Rahmenecken schwenkbar. Die Bearbeitungswerkzeuge für das Rahmeneck befinden sich an zwei im Abstand voneinander angeordneten und in Bearbeitungsstellung das Rahmeneck seitlich übergreifenden Werkzeugträgern, welche an einem zweiachsig verfahrbaren Schlitten angeordnet sind. Der Drehpunkt für die Bearbeitungseinheiten ist möglichst nahe an der Innenkante des zu bearbeitenden Rahmenecks gewählt, um auch kleinere Rahmen bearbeiten zu können. Gerade hinsichtlich kleinerer Rahmenbreiten sind aber die Einsatzmöglichkeiten der bekannten Vorrichtung erheblich eingeschränkt. Denn, insbesondere bei der Außeneckbearbeitung des Rahmens mittels eines Fräswerkzeuges muß dieses sehr weit in Richtung der Schwenkachse verfahren werden. Hierfür steht aber häufig kein Verfahrweg mehr zur Verfügung, da der Schlitten mit den an seinem unteren Schenkel angeordneten Werkzeugen zur Bearbeitung des Rahmens von seiner in Aufspannstellung unteren Seite her bereits an die Schwenkachse anstößt.

Davon ausgehend liegt der Erfindung die Aufgabe zugrunde, eine Vorrichtung der eingangs genannten Art dahingehend auszubilden, daß eine einfache und schnelle Bearbeitung auch von kleinsten Rahmenbreiten ermöglicht ist.

Diese Aufgabe wird bei einer Vorrichtung der eingangs genannten Art dadurch gelöst, daß zumindest einer der beiden Werkzeugträger in der wenigstens einen Verfahrrichtung des Schlittens verschiebbar an dem Schlitten gehalten und zusammen mit dem Schlitten verfahrbar ist, jedoch ab einem vorgegebenen Verfahrweg in Richtung der Bearbeitungsstellung gegenüber dem Schlitten in seiner Stellung verharrt.

Durch die Erfindung ist es ermöglicht, die an dem feststehenden Werkzeugträger angeordneten Bearbeitungswerkzeuge, insbesondere diejenigen für die Außeneckbearbeitung, wie bspw. einen Scheiben- oder Profilfräser oder etwa ein Sägeblatt, ebenso wie ein Bohrwerkzeug zum Bohren der Dichtungsnut, in eine vordere Bearbeitungsstellung an dem Rahmen zu bringen, ohne daß die an dem anderen Werkzeugträger angeordneten Bearbeitungswerkzeuge bzw. der Werkzeugträger selbst die Bewegung des Schlittens blockiert. Somit ist die Einsatzbreite der erfindungsgemäßen Vorrichtung gerade für die Bearbeitung von kleinsten Rahmen wesentlich verbessert. Dies ist insbesondere bei Eckenputzmaschinen mit zwei oder einer Gruppe seitlich einer Förderbahn für die Rahmen angeordneten und quer zur Förderbahn jeweils relativ zueinander verstellbaren Bearbeitungseinheiten von besonderem Vorteil.

Die Verfahrbarkeit des verschiebbaren Werkzeugträgers im Schlepp mit dem Schlitten bzw. dem feststehend am Schlitten angeordneten Werkzeugträger läßt sich nach einer ersten Ausgestaltung der Erfindung dadurch erreichen, daß ein sich am Schlitten abstützender und auf den verschiebbaren Werkzeugträger in Richtung seiner Grundstellung an dem Schlitten wirkender Kraftfederspeicher vorgesehen ist. Der Schlitten ist vorzugsweise als zweiachsig verfahrbarer Kreuzschlitten ausgebildet.
der Kraftfederspeicher kann nach einer Ausgestaltung der Erfindung als pneumatisches oder hydraulisches Kraftfederelement, vorzugsweise als Druckfeder, ausgebildet sein und sich an einem an dem Schlitten angeordneten Widerlager abstützen und gegen einen an dem verschiebbaren Werkzeugträger angeordneten, ggf. einstellbaren Anschlag angreifen. Hierdurch läßt sich der bewegliche Werkzeugträger in seine Grundstellung am Schlitten, bspw. in eine mit dem feststehenden Werkzeugträger fluchtenden Position zurückführen.

Insbesondere für den Einsatz von Abstechmessern zur Bearbeitung der Sichtflächen des Rahmens ist es nach einem Gedanken der Erfindung vorgesehen, daß der Anschlag an dem verschiebbaren Werkzeugträger in seiner Grundstellung an einem, ggf. einstellbaren Gegenanschlag des Schlittens anliegt, so daß in einer Rückwärtsbewegung des Schlittens infolge des Formschlusses mit dem beweglichen Werkzeugträger die in Aufspannstellung des Rahmens an seiner Unterseite vorhandenen Schweißraupen mit Hilfe von Abstechmessern sauber abgetragen werden können.

Weitere vorteilhafte Ausgestaltungen des Erfindungsgedankens sind Gegenstand weiterer Unteransprüche.

Nachfolgend wird ein Ausführungsbeispiel der Erfindung anhand der Zeichnung näher erläutert.

Es zeigen:
- Figur 1: eine Draufsicht auf eine mögliche Ausführungsform einer erfindungsgemäßen Vorrichtung mit zwei seitlich einer Förderbahn für die Rahmen angeordneten verschwenkbaren Bearbeitungseinheiten,
- Figur 2: die Bearbeitungseinheiten der Vorrichtung gemäß Figur 1, jedoch in einer um 90° verschwenkten Lage zur Bearbeitung einer sogenannten Kämpferverbindung eines Rahmens und
- Figuren 3 bis 7: einen Längsschnitt durch eine der Bearbeitungseinheiten gemäß Figuren 1 und 2 in einer Arbeitsfolge zur Bearbeitung eines Rahmenecks.

Die in der Zeichnung dargestellte Verputzvorrichtung dient dazu, die Rahmenecken von aus stumpfgeschweißten Profilstücken, insbesondere Kunststoffprofilstücken, bestehenden Fenster- oder Türrahmen 3 so zu bearbeiten, daß die beim Schweißvorgang entstandenen Schweißraupen allseitig entfernt werden.

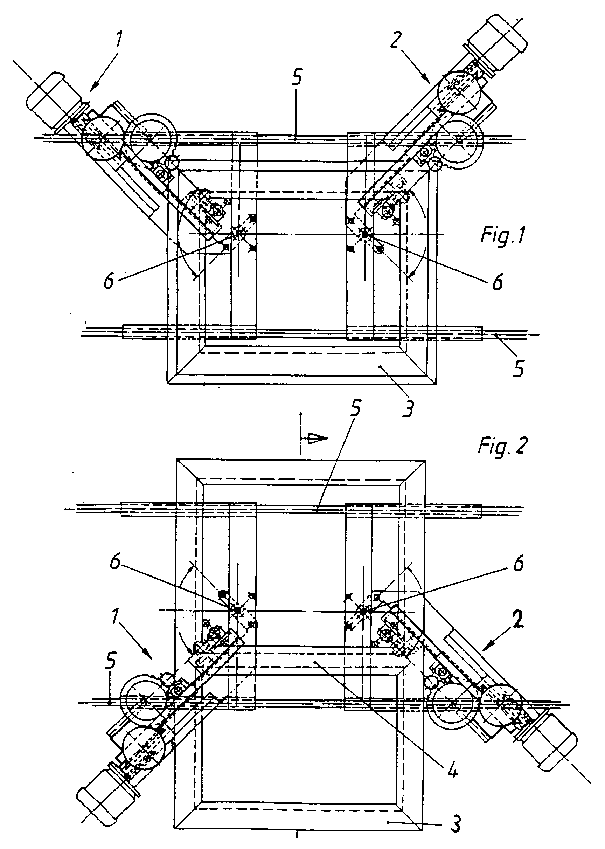

Die Verputzvorrichtung weist gemäß Figuren 1 und 2 zwei Bearbeitungseinheiten 1, 2 auf mit den weiter unten noch beschriebenen Werkzeugen zur Bearbeitung der Eckverbindung des Rahmens 3. Die Bearbeitungseinheiten 1, 2 sind quer zur Förderrichtung des Rahmens 3 an den in Figur 1 und 2 angedeuteten Führungen 5 verstellbar, um unterschiedliche Rahmenbreiten bearbeiten zu können. Desweiteren sind die Bearbeitungseinheiten 1 und 2 um eine Achse 6 mit einem Winkel von 90° verschwenkbar, um bspw. das in Förderrichtung vorauseilende und das nachfolgende Rahmeneck, oder wie in Figur 2 angedeutet, eine sogenannte Kämpferverbindung 4 eines Rahmens 3, bearbeiten zu können.

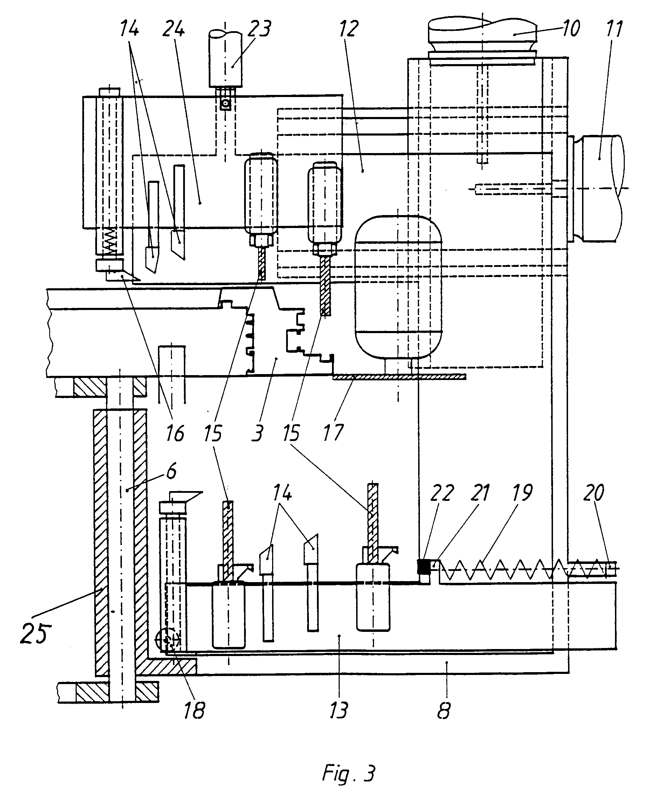

In Figuren 3 bis 7 ist ein Teillängsschnitt durch eine dieser Bearbeitungseinheiten 1 und 2 dargestellt, wobei in den aufeinanderfolgenden Figuren eine mögliche Arbeitsfolge der Verputzmaschine dargestellt ist. Dabei ist das Maschinengestell nur teilweise, die Aufspanneinrichtung zum Festhalten des Rahmens 3 während seiner Bearbeitung auf der Aufspannebene 7 dagegen gar nicht dargestellt. Jede Bearbeitungseinheit 1, 2 weist ein um eine vertikale Achse 6 verschwenkbares Trägerteil 8 auf, an welchem ein Schlitten 9 mittels Antriebseinrichtungen 10, 11 in zwei senkrecht aufeinanderstehenden Richtungen, bei dem hier gewählten Ausführungsbeispiel in einer horizontalen und einer vertikalen Achse, verfahrbar ist. An dem Schlitten 9 ist ein oberer Werkzeugträger 12 und ein unterer Werkzeugträger 13 angeordnet, an welchen bei dem hier gewählten Ausführungsbeispiel Bearbeitungswerkzeuge 14 für die Inneneckbearbeitung, Bearbeitungswerkzeuge 16 in Form von Abstechmessern für die Sichtflächen sowie Bohrwerkzeuge 15 für die Dichtungsnuten des Rahmens 3 gehalten sind. Zusätzlich ist am oberen Werkzeugträger 12 ein scheibenförmig ausgebildeter Fräser 17 zur Abarbeitung der Schweißraupe an dem Rahmenaußeneck angeordnet.

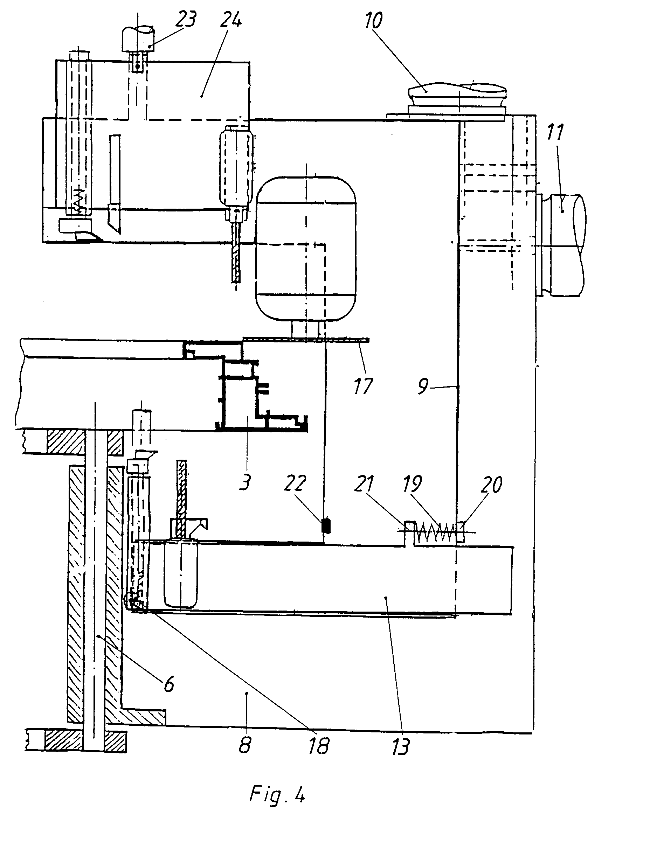

In Figur 3 ist die Ausgangsstellung der Maschine für die Bearbeitung des Außenecks des Rahmens 3 dargestellt, wobei der scheibenförmige Fräser 17 durch die Zweiachsen-Steuerung des Schlittens 9 die Rahmenaußenkontur abfährt und dabei die durch das Schweißen der Rahmenschenkel entstandene Schweißraupe abträgt. Dabei fährt der Schlitten 9, wie aus Figur 4 ersichtlich, von unten nach oben und in Richtung zur Schwenkachse 6 hin, bis der Fräser 17 die Oberkante des Rahmens 3 erreicht hat.

Wäre nun der untere Werkzeugträger 13 starr mit dem Schlitten 9 verbunden, wäre das Vorfahren des Fräsers 17 blockiert, da der untere Werkzeugträger 13 an die Schwenkachse 6 anstoßen würde. Dies wird aber gerade verhindert, indem der untere Werkzeugträger 13 verschiebbar an dem Schlitten 9 angeordnet ist und entsprechend der Arbeitsstellung des Schlittens 9 in Figur 4 ab einem bestimmten Verfahrweg des Schlittens 9 nach vorne in seiner Stellung verharrt und sich dabei mit einer Laufrolle 18 an der Schwenkachse 6 abstützt. Bei Verfahren des Fräsers 17 in vertikaler Richtung nach oben rollt die Laufrolle 18 entlang eines an der Schwenkachse 6 gelagerten Hülsenteils 25, welches an dem vorderen Ende des den Schlitten 9 haltenden Trägerteils 8 angeordnet ist. Wird dagegen der Schlitten 9 in seine Ausgangsstellung gemäß Figur 3 zurückgefahren, wird der untere Werkzeugträger 13 durch ein Federelement 19 wieder in seine Grundstellung am Schlitten 9 verschoben.

Dieses Federelement 19 stützt sich an einem Widerlager 20 des Schlittens 9 ab und drückt gegen einen mit dem unteren Werkzeugträger 13 verbundenen Nocken bzw. Anschlag 21, welcher sich in der Grundstellung des verschiebbaren Werkzeugträgers 13 an einem mit dem Schlitten 9 verbundenen und ggf. einstellbaren Gegenanschlag 22 abstützt, wie dies aus Figuren 3, 5, 6 und 7 zu ersehen ist.

Selbstverständlich können anstelle eines Federelementes 19 auch pneumatische, hydraulische o. dgl. Kraftspeicher eingesetzt werden.

Die Verschiebbarkeit des unteren Werkzeugträgers 13 an dem Schlitten 9 kann bspw. durch Schienen, Führungen o. dgl. Konstruktionselemente erfolgen.

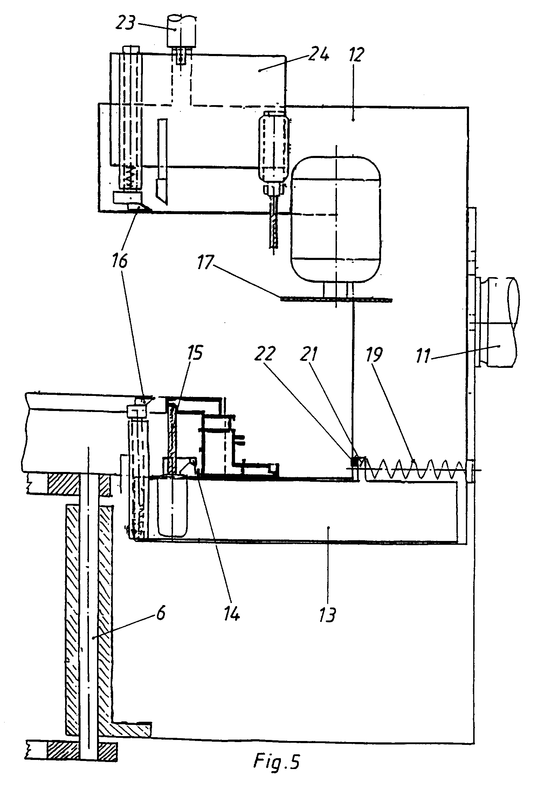

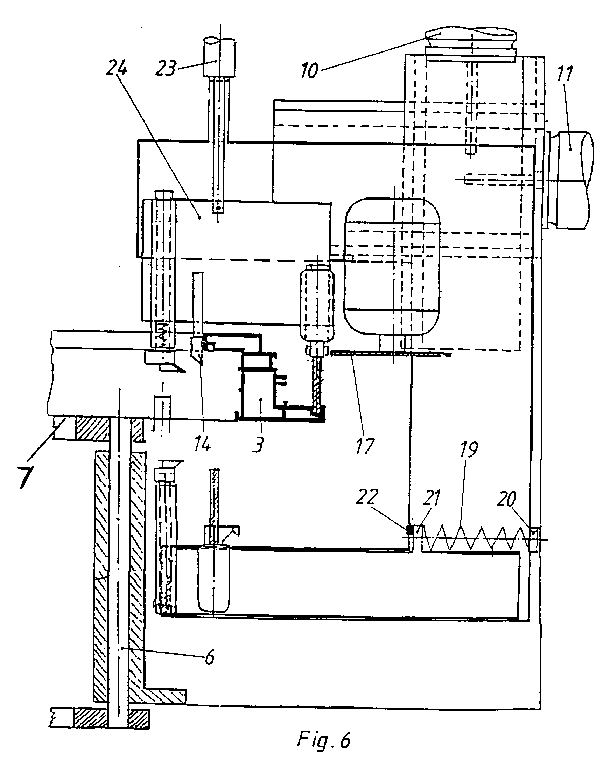

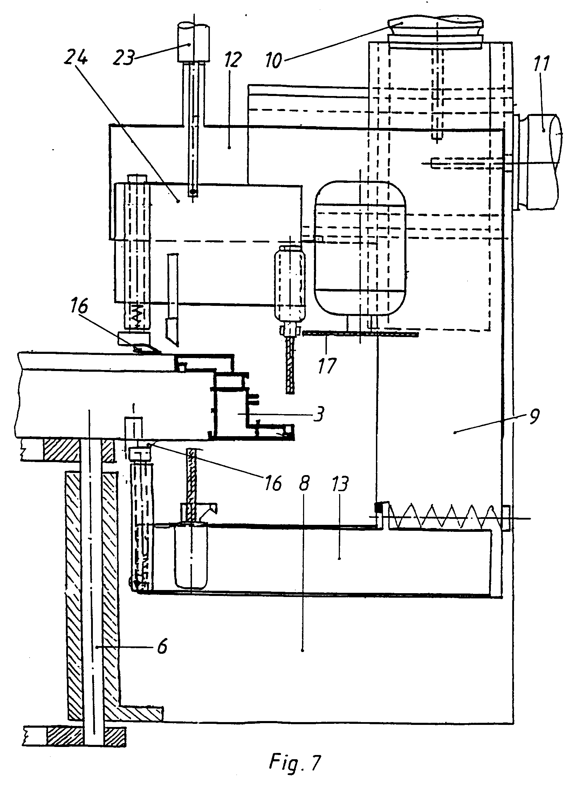

Bei der weiteren Bearbeitung des Fensterrahmens 3 werden, nachdem der Fräser 17 die in Figur 4 gezeigte Stellung erreicht hat und die Schweißraupe vom Rahmenaußeneck abgefräst wurde, entsprechend Figur 5 die am unteren Werkzeugträger 13 angeordneten Bearbeitungswerkzeuge 14, 15 zum Einsatz gebracht, wobei eine Dichtungsnut an dem Rahmen 3 ausgefräst und seine Innenecke bearbeitet wird. Danach wird der Schlitten 9 nach unten gefahren, um über eine weitere Antriebseinheit 23, bspw. über einen Linearmotor oder eine hydraulische oder pneumatische Kolben-Zylinder-Anordnung, die an einem oberen Teil-Werkzeugträger 24 gehaltenen absenkbaren Bearbeitungswerkzeuge 14 und 15 in Arbeitsstellung zu bringen. Hierdurch erfolgt die Bearbeitung des Innenecks und das in Figur 6 dargestellte Einfräsen der Dichtungsnut in den Rahmen 3. Danach wird der Schlitten 9 nach oben gefahren, bis das als Sichtflächenmesser ausgebildete Bearbeitungswerkzeug 16 des unteren Werkzeugträgers 13 an dem Rahmen 3 ansteht. Dabei befindet sich der untere Werkzeugträger 13 in seiner Grundstellung am Schlitten 9, wobei der Anschlag 21 des unteren Werkzeugträgers 13 am Gegenanschlag 22 des Schlittens 9 anliegt. Gleichzeitig wird der obere Teil-Werkzeugträger 24 mittels der Antriebseinheit 23 abgesenkt, um, wie aus Figur 7 zu ersehen, das Sichtflächenmesser 16 des oberen Werkzeugträgers 12 in Arbeitsstellung zu bringen. Durch eine Rückwärtsbewegung des Schlittens 9 erfolgt dann ein gleichzeitiges Abziehen der Schweißraupe an den oberen und unteren Sichtflächen des Rahmens 3, wobei der untere Werkzeugträger 13 durch den Formschluß zwischen seinem Anschlag 21 und dem Gegenanschlag 22 des Schlittens 9 mit verschoben wird.

### Bezugszeichenliste

- 1: - Bearbeitungseinheit
- 2: - Bearbeitungseinheit
- 3: - Rahmen
- 4: - Kämpferverbindung
- 5: - Führung
- 6: - Schwenkachse
- 7: - Aufnahmeebene, Aufnahme
- 8: - Trägerteil
- 9: - Schlitten
- 10: - Antriebseinrichtung
- 11: - Antriebseinrichtung
- 12: - Werkzeugträger
- 13: - Werkzeugträger
- 14: - Bearbeitungswerkzeug
- 15: - Bohrwerkzeug
- 16: - Bearbeitungswerkzeug
- 17: - Fräser
- 18: - Roll- oder Gleitelement, Laufrolle
- 19: - Kraftfederspeicher, Druckfeder
- 20: - Widerlager
- 21: - Anschlag
- 22: - Gegenanschlag
- 23: - Antriebseinheit
- 24: - Teilwerkzeugträger
- 25: - Hülsenteil

## Patentansprüche

1. Vorrichtung zur Bearbeitung der Eckverbindungen von aus Profilstücken geschweißten Rahmen (3), insbesondere Fenster- oder Türrahmen, mit wenigstens einer um eine Achse (6) senkrecht zur Aufnahmeebene (7) des zu bearbeitenden Rahmens (3) schwenkbaren Bearbeitungseinheit (1, 2), welche an einem wenigstens in Richtung senkrecht zur Schwenkachse (6) von einer zurückgezogenen Ausgangsstellung in eine Bearbeitungsstellung an dem Rahmen (3) verfahrbaren Schlitten (9) angeordnet ist, der zwei im Abstand voneinander angeordnete, in Bearbeitungsstellung das zu bearbeitende Rahmeneck zumindest teilweise seitlich übergreifende Werkzeugträger (12, 13) für die Bearbeitungswerkzeuge (14 bis 17) aufweist, dadurch gekennzeichnet, daß zumindest einer der beiden Werkzeugträger (12, 13) in der wenigstens einen Verfahrrichtung des Schlittens (9) verschiebbar an dem Schlitten (9) gehalten und zusammen mit dem Schlitten verfahrbar ist, jedoch ab einem vorgegebenen Verfahrweg in Richtung der Bearbeitungsstellung gegenüber dem Schlitten (9) in seiner Stellung verharrt.

2. Vorrichtung nach Anspruch 1, dadurch gekennzeichnet, daß ein sich an dem, vorzugsweise als zweiachsig verfahrbaren Schlitten (9) abstützender und auf den verschiebbaren Werkzeugträger (13) in Richtung seiner Grundstellung an dem Schlitten (9) wirkender Kraftfederspeicher (19) vorgesehen ist.

3. Vorrichtung nach Anspruch 2, dadurch gekennzeichnet, daß der Kraftfederspeicher als pneumatisches oder hydraulisches Kraftfederelement, vorzugsweise als Druckfeder (19) ausgebildet ist.

4. Vorrichtung nach Anspruch 2 oder 3, dadurch gekennzeichnet, daß sich der Kraftfederspeicher (19) an einem an dem Schlitten (9) angeordneten Widerlager (20) abstützt und gegen einen an dem verschiebbaren Werkzeugträger (13) angeordneten, ggf. einstellbaren Anschlag (21) angreift.

5. Vorrichtung nach Anspruch 4, dadurch gekennzeichnet, daß der Anschlag (21) an dem verschiebbaren Werkzeugträger (13) in dessen Grundstellung an einem, ggf. einstellbaren Gegenanschlag (22) des Schlittens (9) anliegt.

6. Vorrichtung nach einem der Ansprüche 1 bis 5, dadurch gekennzeichnet, daß ein für die Bearbeitung des Rahmenaußenecks vorgesehenes Bearbeitungswerkzeug, wie bspw. ein Fräser (17), an dem feststehend am Schlitten (9) angeordneten Werkzeugträger (12) gehalten ist.

7. Vorrichtung nach einem der Ansprüche 1 bis 6, dadurch gekennzeichnet, daß der verschiebbare Werkzeugträger (13) an seinem freien Ende wenigstens ein Roll- oder Gleitelement (18) aufweist zum Abrollen bzw. Gleiten an einem Bauteil der Vorrichtung, wie bspw. an dem die Schwenkachse (6) umgebenden Hülsenteil (25) des Schlitten-Trägerteils (8), bei einem Verfahren des Schlittens (9) in einer Richtung parallel zur Schwenkachse (6).

8. Vorrichtung nach einem der Ansprüche 1 bis 7, dadurch gekennzeichnet, daß sich die Schwenkachse (6), ausgehend von einem Montagepunkt der Vorrichtung, bis höchstens zur Aufnahmeebene (7) für den Rahmen (3) erstreckt, wobei der verschiebbare Werkzeugträger (13) nächstliegend der Schwenkachse (6) angeordnet ist.

9. Vorrichtung nach einem der Ansprüche 1 bis 8, dadurch gekennzeichnet, daß sie für eine im wesentlichen horizontale Bearbeitung des Rahmens (3) ausgebildet ist mit im wesentlichen vertikal ausgerichteter Schwenkachse (6), wobei der obere Werkzeugträger (12) feststehend und der untere Werkzeugträger (13) verschiebbar an dem Schlitten (9) angeordnet sind.

10. Vorrichtung nach einem der Ansprüche 1 bis 9, gekennzeichnet durch wenigstens zwei Bearbeitungseinheiten (1, 2) seitlich einer Förderbahn für den Rahmen (3), welche quer zur Förderbahn relativ zueinander verfahrbar sind.

## Claims

1. Device for the treatment of corner joints of frames (3), in particular of window or door frames, welded together from profile section members, with at least one treatment unit (1, 2), which is pivotable about an axle (6) perpendicular to the plane (7) of reception of the frame (3) to be treated and which is arranged at a carriage (9), which is movable from a retracted initial setting into a treatment setting at the frame (3) at least in direction perpendicular to the pivot axle (6) and which displays two tool carriers (12, 13), which are arranged at a spacing one from the other and laterally overlap at least partially the frame corner to be treated in the treatment setting, for the treatment tools (14 to 17), characterised thereby, that at least one of both the tool carriers (12, 13) is retained at the carriage (9) to be displaceable in the at least one direction of movement of the carriage (9) and movable together with the carriage (9), but persists in its setting relative to the carriage (9) after a preset movement travel in the direction of the treatment setting.

2. Device according to claim 1, characterised thereby, that a spring force storage device (19) is provided, which bears on the carriage (9), which is preferably movable biaxially, and acts on the displaceable tool carrier (13) in the direction of its normal setting at the carriage (9).

3. Device according to claim 2, characterised thereby, that the spring force storage device is formed as pneumatic or hydraulic spring force element, preferably as compression spring (19).

4. Device according to claim 2 or 3, characterised thereby, that the spring force storage device (19) bears against a counterbearing (20) arranged at the carriage (9) and engages at an abutment (21) arranged, in a given case to be settable at the displaceable tool carrier (13).

5. Device according to claim 4, characterised thereby, that the abutment (21) at the displaceable tool carrier (13) in the normal setting thereof lies against a counterabutment (22), which in a given case is settable, of the carriage (9).

6. Device according to one of the claims 1 to 5, characterised thereby, that a treatment tool, such as for example a milling tool (17), provided for the treatment of the outer corner of the frame is retained at the tool carrier (12) arranged stationarily at the carriage (9).

7. Device according to one of the claims 1 to 6, characterised thereby, that the displaceable tool carrier (13) at its free end displays at least one rolling or sliding element (18) for rolling or sliding along a component of the device such as, for example, along the sleeve part (25), which surrounds the pivot axle (6), of the carriage carrier part (8) during a movement of the carriage (9) in a direction parallel to the pivot axle (6).

8. Device according to one of the claims 1 to 7, characterised thereby, that the pivot axle (6) starting out from a mounting point of the device extends at most to the height of the plane (7) of reception for the frame (3), wherein the displaceable tool carrier (13) is arranged to lie next to the pivot axle (6).

9. Device according to one of the claims 1 to 8, characterised thereby, that it is constructed for a substantially horizontal treatment of the frame (3) with substantially vertically oriented pivot axle (6), wherein the upper tool carrier (12) is arranged to be stationary at the carriage (9) and the lower tool carrier (13) is arranged to be displaceable at the carriage (9).

10. Device according to one of the claims 1 to 9, characterised by at least two treatment units (1, 2) laterally of a conveying track for the frame (3), which units are movable one relative to the other relative to the conveying track.

## Revendications

1. Dispositif pour l'usinage de joints d'angle de châssis (3) fabriqués par soudage de morceaux de profilés, en particulier de châssis de fenêtres ou de portes, comprenant au moins une unité d'usinage (1, 2) qui peut pivoter autour d'un axe (6) perpendiculairement au plan d'appui (7) du chassis (3) à usiner, unité qui est disposée sur un chariot (9) pouvant se déplacer le long du châssis (3) au moins dans une direction, perpendiculairement à l'axe de pivotement (6), pour passer d'une position de départ reculée à une position d'usinage, chariot qui présente deux supports d'outils (12, 13) destinés aux outils d'usinage (14 à 17), disposés à distance l'un de l'autre et qui, dans la position d'usinage, empiètent latéralement, au moins partiellement, sur l'angle du châssis à usiner, caractérisé en ce qu'au moins l'un des deux supports d'outils (12, 13) est tenu sur le chariot (9) de façon à pouvoir coulisser dans au moins une direction de déplacement du chariot (9) et à pouvoir sa déplacer conjointement avec le chariot mais à s'arrêter dans sa position à partir d'une course de déplacement prédéterminée par rapport au chariot (9) en direction de la position d'usinage.

2. Dispositif selon la revendication 1, caractérisé en ce qu'il est prévu un accumulateur élastique de force (19) qui prend appui sur le chariot (9), lequel peut de préférence se déplacer selon deux axes, et qui agit sur le support d'outils coulissant (13), en direction de sa position de base sur le chariot (9).

3. Dispositif selon la revendication 2, caractérisé en ce que l'accumulateur élastique de force est constitué par un élément élastique de force, pneumatique ou hydraulique, de préférence par un ressort de compression (19).

4. Dispositif selon la revendication 2 ou 3, caractérisé en ce que l'accumulateur élastique de force (19) prend appui contre une portée (20) agencée sur le chariot (9) et attaque une butée (21), éventuellement réglable, agencée sur le support d'outils coulissant (13).

5. Dispositif selon la revendication 4, caractérisé en ce que la butée (21) est en appui contre le support d'outils coulissant (13), placé dans sa position de base, contre une contre-butée (22), éventuellement réglable, du chariot (9).

6. Dispositif selon une des revendications 1 à 5, caractérisé en ce qu'un outil d'usinage prévu pour l'usinage de l'angle extérieur du châssis, par exemple une fraise (17) est tenu sur le support d'outils (12) disposé fixe sur le chariot (9).

7. Dispositif selon une des revendications 1 à 6, caractérisé en ce que le support d'outils coulissant (13) présente à son extrémité libre au moins un élément roulant ou glissant (18) pour rouler ou glisser contre un élément du dispositif, par exemple, contre la partie de manchon (25) de la partie porteuse (8) du chariot qui entoure l'axe de pivotement (6), lorsque le chariot (9) se déplace dans une direction parallèle à l'axe de pivotement (6).

8. Dispositif selon une des revendications 1 à 7, caractérisé en ce que l'axe de pivotement (6) s'étend au maximum jusqu'au plan d'appui (7) recevant le châssis (3) en partant d'un point de montage du dispositif, le support d'outils coulissant (13) étant agencé à proximité immédiate de l'axe de pivotement (6).

9. Dispositif selon une des revendications 1 à 8, caractérisé en ce qu'il est prévu pour un usinage sensiblement horizontal du châssis (3) et possède un axe de pivotement (6) orienté sensiblement verticalement, le support d'outils supérieur (12) étant agencé fixe sur le chariot (9) et le support d'outils inférieur (13) étant agencé coulissant sur ce chariot.

10. Dispositif selon une des revendications 1 à 9, caractérisé par au moins deux unités d'usinage (1, 2) disposées latéralement à une voie de transport du châssis (3), et qui peuvent se déplacer l'une par rapport à l'autre transversalement à la voie de transport.
